# EUROPEAN PATENT APPLICATION

(11) **EP 3 865 800 A1**
(43) Date of publication of application: **18.08.2021**
(21) Application number: 20157650.1
(22) Date of filing: 17.02.2020
(51) Int. Cl.: F27B 5/04, C22B 9/00, C22B 9/02, C22B 9/04

(54) **SIMULTANEOUS DISTILLATION AND ALLOYING**

(71) Applicant: ETH Zurich, 8092 Zurich (CH); De Cavis AG, 8600 Dübendorf (CH)
(72) Inventor: WEGMANN, Christian, 8200 Schaffhausen (CH); LÖFFLER, Jörg, 8606 Greifensee (CH); GONZENBACH, Urs, 8107 Buchs (CH); BERGER, Leopold, 8006 Zürich (CH); STURZENEGGER, Philip, 8606 Greifensee (CH)

(57) **Abstract**

A device (1) for producing a target material from starting material comprises a chamber (2), at least one trough (3), at least a first heating element (4) being configured to heat the chamber (2) such that starting material is vaporized, and at least one collecting vessel (5) being configured to receive a condensate that will constitute the target material. The device (1) optionally comprises at least a first source of negative pressure (24a) or at least a first supply device (24b) being in connection with the chamber (2) being configured to evacuate the chamber (2) or to supply an inert gas to the chamber (2). The device (1) further comprises at least one condensation device (6), wherein said condensation device (6) is configured to condensate the vaporized starting material, whereby the condensate is formed, and/or at least a first gate device (26) being in connection with the chamber (2) such, that the starting material is introducible into the chamber (2) via said first gate device (26).

## Description

### TECHNICAL FIELD

The present invention relates to a device for producing a target material, preferably one or more metals and/or one or more alloys, from starting material according to claims 1 and 2, and to a method of producing a target material, preferably one or more metals and/or one or more alloys, from a starting material according to claims 16 and 17, respectively.

### PRIOR ART

The production of purified, especially high-purity metals or metal alloys is of great importance in various fields. For example, in the field of medical implants such as bone implants it is crucial that the bone implants fulfil mechanical requirements such as a particular load-bearing function during a physiologically required support time. To this end magnesium materials are gaining momentum. However, commercially pure magnesium is of very limited technical use due to its susceptibility to corrosion and especially its low mechanical strength. Both drawbacks have been addressed by adequate alloying magnesium with other elements. However, the corrosive tendencies of magnesium in aqueous liquids can also be exploited for the use of temporary medical implants, for example to improve blood flow when a vein or artery is too narrow or blocked, or for the fixation of a broken bone until its healing. Degradation due to corrosion of the implant fosters a second surgery for implant removal unnecessary. In this context it is however important that the degradation happens slowly and homogenously. Especially promising for this application appear Magnesium-Zinc-Calcium alloys, which feature excellent mechanical properties and are at the same time highly biocompatible because all three elements are naturally occurring in the human body. However, especially impurities such as iron, nickel, cobalt, silicon, manganese, aluminium or copper cause so called microgalvanic cells on a microscopic level leading to increased degradation speed. In order to reach the required slow degradation rates, a removal of all chemical elements with high electrochemical potential is essential. Commonly a removal of unwanted elements is achieved by an ultrahigh-purification of magnesium by vacuum distillation.

For example, from WO 2013/107644 a process and apparatus for vacuum distillation of magnesium is known, which comprises a reactor having an upper region for receiving the magnesium to be purified and a lower region with a crucible made of graphite for receiving the condensed purified magnesium, wherein walls of the crucible act as condensation surfaces. The condensed magnesium being received in the crucible is maintained in a liquid state until the distillation process is finished. Then, said melt is allowed to solidify. A temperature gradient is present in the crucible. However, with increasing liquid level of magnesium within the crucible the condensation surfaces provided by the crucible decrease and a temperature of the melt increases. This results in a continuous decrease of the distillation speed until the distillation speed is reduced to such an extent that a further distillation is no longer of use. This is an economic disadvantage since magnesium has a rather high vapour pressure and consequently would enable rather high distillation speeds. If a metal with lower vapour pressure shall be distilled, such as calcium for example, this disadvantage results in a severe problem as a complete distillation of this metal would require a time spam that is impracticably high. Furthermore, whereas the distillation of a single metal requires an inactivity of the materials of construction that are suitable for only said single metal, for a simultaneous distillation of several different metals the materials of construction have to be inert towards all of these metals. Graphite, for example, which is commonly used in the distillation of magnesium, is not suitable for a distillation of calcium as it reacts with calcium and forms calcium carbide. This is one of the reasons why magnesium is usually individually distilled and alloyed with other metals such as calcium and zinc in a separate manufacturing step. However, such processes are time consuming, require large amounts of energy, and are prone to failure. Additionally, the handling of certain compounds such as calcium in the alloying step is challenging and usually requires dedicated equipment providing inert-gas atmospheres. A combination to one single step therefore would strongly simplify the whole fabrication process and significantly reduce the resources and costs involved. Furthermore, expensive high-purity alloying elements would not be needed because these elements would be equally purified in the combined process.

### SUMMARY OF THE INVENTION

It is an object of the present invention to provide a device for producing a target material from starting material with high speed and at the same time in a simple manner.

This object is achieved with a device according to claim 1 and claim 2.

In particular, in a first aspect a device for producing a target material, preferably one or more metals and/or one or more alloys, from starting material is provided, which said device comprises a chamber, at least one trough being provided in the chamber, at least a first heating element, and at least one collecting vessel. The trough is configured to receive the starting material. The first heating element is configured to heat the chamber such that starting material being received in the trough is vaporized. The collecting vessel is configured to receive a condensate that will constitute the target material. The device further comprises at least one condensation device, wherein said condensation device is configured to condensate the vaporized starting material, whereby the condensate is formed.

That is to say, the device comprises, inter alia, a collecting vessel and a condensation device. Hence, a condensation of the material and a collection of the material is performed by two different elements. This has several advantages. In fact, the provision of two different elements results in a thermal independency of said two elements. Moreover, it provides a higher structural freedom because the individual elements can be optimally designed according to the function and requirements they have to perform and fulfill independent from one another. This is also reflected in the choice of material of the different elements as the material requirements for the condensation and the collection are often not the same. Furthermore, a dependency of the distillation speed from a filling state of the collecting vessel is strongly reduced or even avoided by the provision of the condensation device. In particular, the condensation device accelerates the distillation and guarantees a minimal distillation speed even if the collecting vessel has reached a higher filling state. The device therefore enables the production of a target material from starting material with high speed and at the same time also in a simple manner.

The device according to the first aspect can optionally further comprise at least a first source of negative pressure that is in connection with the chamber and that is configured to evacuate the chamber. In doing so, the device is configured to perform a vacuum distillation. Alternatively, the device according to the first aspect can optionally further comprise at least a first supply device that is in connection with the chamber and that is configured to supply an inert gas to the chamber. In doing so, the chamber is filled with an inert gas and the distillation can be performed under an inert gas atmosphere.

If the distillation is performed under an inert gas atmosphere it is preferred that the supply device supplies inert gas into the chamber, such that an inert gas pressure in the chamber essentially corresponds to or is higher than a pressure of the outside of the chamber. As the outside of the chamber is typically the surrounding environment the inert gas pressure in the chamber preferably corresponds to the air pressure existing outside, which is about 1 bar. Various inert gases are conceivable. In view of the costs and the availability a preferred inert gas is Argon.

If a vacuum distillation is performed, it is preferred that the chamber is evacuated to an under-pressure being about 10⁻¹ mbar or lower, preferably being about 10⁻² mbar or lower.

In a second aspect a device for producing a target material, preferably one or more metals and/or one or more alloys, from starting material is provided, which device comprises a chamber, at least one trough being provided in the chamber, at least a first heating element, at least one collecting vessel, and at least a first source of negative pressure that is in connection with the chamber and that is configured to evacuate the chamber or at least a first supply device that is in connection with the chamber and that is configured to supply an inert gas to the chamber. The trough is configured to receive the starting material. The first heating element is configured to heat the chamber such that starting material being received in the trough is vaporized. The collecting vessel is configured to receive a condensate that is formed upon a condensation of the starting material and which condensate will constitute the target material. The device further comprises at least a first gate device being in connection with the chamber such, that the starting material is introducible into the chamber via said first gate device.

Hence, the device according to the second aspect allows an essentially continuous introduction of the starting material into the chamber and thus an essentially continuous distillation of the starting material. In this way the drawback of a decreasing distillation speed with increasing filling state of the collecting vessel can be reduced or even prevented. The first gate device preferably corresponds to a lid, a valve, a shutter, a flap or the like that is movable between a closed position and an opened position. The distillation process, i.e. the production of the target material from the starting material, preferably takes place while the first gate device is in its closed position. If the first gate device is in its closed position the chamber is closed towards an outside. In the opened position, an introduction of the starting material into the chamber is enabled. The device according to the second aspect thus allows a simple addition of the starting material into the chamber. Consequently, the production of a target material from starting material with high speed and at the same time also in a simple manner is also enabled by the device according to the second aspect.

The device according to the second aspect can optionally further comprise at least one condensation device as described above with reference to the device according to the first aspect, wherein said condensation device is configured to condensate the vaporized starting material, whereby the condensate is formed.

Likewise, the device according to the first aspect can optionally further comprise at least a first gate device as described with respect to the device according to the second aspect, wherein said first gate is in connection with the chamber such, that the starting material is introducible into the chamber via said first gate device. That is to say, any features, statements and explanations provided with respect to the device according to the first aspect can likewise be present on and apply to the device according to the second aspect, and vice versa. For the sake of simplicity in the following reference is made to a device, wherein reference is made to the device according to the first aspect as well as to the device according to the second aspect.

The device is preferably configured such, that the starting material is introducible into the chamber via said first gate device while the chamber remains evacuated or under an inert gas atmosphere. In this case it is further preferred that the device comprises a preferably heated antechamber that is in connection with the chamber via the first gate device, wherein the antechamber is configured to receive and preferably pre-melt the starting material and to transfer the preferably pre-melted starting material into the trough via the first gate device. Furthermore, it is preferred that the device comprises at least a second source of negative pressure that is in connection with the antechamber in order to evacuate the antechamber or at least a second supply device that is in connection with the antechamber in order to supply inert gas to the antechamber. In this case, the starting material could be introduced into the antechamber in a first step and could then be transferred from the antechamber into the chamber in a second step. To this end the antechamber and the chamber could be connected with one another by means of a connection element such as a tube or pipe, and wherein the first gate device is arranged within said connection element. The antechamber together with the first gate device can be seen as a sluice device that allows a continuous introduction of the starting material into the chamber while the chamber remains evacuated or under an inert gas atmosphere.

However, it is likewise conceivable that the first gate device is arranged in the chamber, for example in a wall of the chamber. In this case a direct introduction of the starting material into the chamber is enabled. When doing so the chamber should be cooled and adjust a pressure within the chamber to ambient pressure prior to the introduction of the starting material. After the introduction of the starting material the chamber should be evacuated or filled with inert gas and heated up again.

A removal of the condensate from the collecting vessel could be achieved according to a process that is well-known in the art as continuous casting or a casting based on casting drums, respectively. In this case the liquid condensate is fed from the collecting vessel directly into the top of an open-base cooled mold where it continuously solidifies and is extracted. Alternatively, the liquid condensate is fed from the collecting vessel directly onto cooled rolls, where it solidifies and is then rolled.

However, it is likewise conceivable that the device further comprise at least a second gate device which is in connection with the at least one collecting vessel, and wherein the condensate is removable from the at least one collecting vessel via said second gate device.

That is to say, at least a second gate device could be provided in connection with the collecting vessel, for example in the form of a lid that constitutes a bottom part of the collecting vessel. In this case the condensate being collected within the collecting vessel can be allowed to solidify. After solidification, the lid is removed and the solidified target material is extracted from the collecting vessel.

The device can further comprise a retrieval chamber that is in connection with the collecting vessel via the second gate device and with the first source of negative pressure or with the first supply device, and wherein the retrieval chamber is configured to extract the condensate from the collecting vessel.

That is, in the event that no continuous casting or a casting based on drums shall be performed it is preferred to provide a retrieval chamber that is in connection with the collecting vessel via the second gate device, for example via a lid in the bottom part of the collecting vessel. To this end it is preferred that the retrieval chamber also comprises a lid or the like, i.e. a further second gate device. Moreover, a connection element such as a tube or a pipe can be provided between the lid in the bottom part of the collecting vessel and the lid of the retrieval chamber. In doing so a second sluice device being constituted by the tube or pipe and the lids is provided. Said retrieval chamber is preferably arranged below the second gate devices such that the solidified target material can vertically fall down from the collecting vessel into the retrieval chamber if the lids are opened. This arrangement enables a rapid removal of the purified target material in solid form. Furthermore, if the retrieval chamber is maintained under vacuum or filled with an inert gas a repeated evacuation of the chamber or a repeated filling of the chamber with inert gas can be dispensed with. Instead, as soon as the lids are closed the distillation process can be continued.

It should be noted that it is likewise conceivable to remove the condensate from the collecting vessel in the liquid state. In this case it is preferred to provide a casting mould within the retrieval chamber that collects the liquid condensate. If the condensate shall be removed in the liquid state it is conceivable to arrange a heating element at least partially around the collecting vessel so as to ensure that the collected condensate remains in the liquid state. The casting mould and the retrieval chamber are preferably kept at room temperature. Moreover, the casting mould preferably comprises or consists of graphite, copper or steel.

The first and second gate devices have just been described as mechanical elements such as a lid, a valve, a shutter, a flap or the like. However, it is also conceivable to provide said gate devices by means of a solidified and melted starting material or target material. For example, the connection element connecting the chamber and the antechamber could be configured to be cooled such that the starting material solidifies at the cooling location, whereby the chamber is closed off towards the antechamber by the solidified starting material. Said connection element is then also preferably configured to be heated such that the solidified starting material can be melted, whereby the closure being provided by the solidified starting material is removed. The connection element between the bottom part of the collecting vessel and the retrieval chamber could likewise be configured to be cooled and heated so as to create a closure by means of solidified target material and a removal of the closure by melting said solidified target material.

Conceivable starting materials for use with the device are individual materials, preferably individual metals that shall be purified. In this case the target materials correspond to purified, in particular high-purity metals. For example, the starting material could be one of magnesium (Mg), zinc (Zn), calcium (Ca), lithium (Li), bismuth (Bi), lead (Pb), cadmium (Cd), barium (Ba), mercury (Hg), arsenic (As), antimony (Sb), and strontium (Sr), and wherein the target material is purified or high-purity magnesium, zinc, calcium, lithium, bismuth, lead, cadmium, barium, mercury, arsenic, antimony, or strontium. However, it is likewise conceivable that the starting materials are two or more compounds, preferably two or more metals that shall form an alloy, particularly preferably a purified or even high-purity alloy. For example, the starting material could be two or more of magnesium, zinc, calcium, lithium, bismuth, lead, cadmium, barium, mercury, arsenic, antimony, or strontium, and wherein the target material corresponds to purified or ultrahigh-purity alloys of two or more of these compounds. For example, if magnesium, zinc and calcium are used as starting materials, the present invention enables the generation of ultrahigh-purity magnesium-zinc-calcium (Mg-Zn-Ca) alloys. It should be noted that other materials that have not been mentioned here could likewise qualify as starting material. Generally, a material qualifies as starting material if it has a vapour pressure that is high enough in the region of a maximally possible distillation temperature in order to reach a practicable high distillation speed. Regarding a purification state of the materials, a purity of 99.5% in the case of magnesium is referred to as pure magnesium, a purity of 99.95% is referred to as high-purity magnesium, and a purity of 99.995% is referred to as ultrahigh-purity magnesium.

The collecting vessel and the condensation device are preferably formed separately from one another. That is, and as already indicated earlier, the collecting vessel and the condensation device are preferably configured as two different elements. The condensation device thereby provides an additional condensation possibility as compared to the condensation device of the prior art which is provided by means of the surfaces of the crucible collecting the target material themselves. Hence, the additional condensation device according to the present invention results in an additional temperature zone within the chamber, the temperature of which can more easily been controlled than the temperature of the crucible according to the state of the art.

The condensation device is preferably arranged in an upper region of the chamber, and wherein the collecting vessel is arranged in a lower region of the chamber.

For example, the collecting vessel could be arranged below the condensation device with respect to a vertical direction extending from the upper region of the chamber towards the lower region of the chamber. Hence, the condensation device is preferably arranged above the collecting vessel such that condensate that is formed on the condensation device can flow or drop into the collecting vessel.

Several arrangements of the condensation device are conceivable. For example, the condensation device can project from an upper wall of the chamber at least partially into an interior of the chamber. Additionally or alternatively the condensation device could be configured as an integral or a separable part of the chamber. A condensation device being configured integrally with the chamber means that the condensation device cannot be removed from the chamber. In other words, the condensation device and the device, in particular the chamber, can be inseparable and form a single-piece element.

The condensation device preferably corresponds to a heat exchanger. A heat exchanger corresponds to an element that is configured to cool or to heat. In the context of the present invention it is particularly preferred that the heat exchanger is configured to cool so as to remove or extract heat from the chamber. To this end various configurations of a heat exchanger are conceivable. For example, the condensation device can comprise one or more supply tubes extending from an outside of the device into an interior of the condensation device such that a cooling medium, preferably air, can be supplied into the interior of the condensation device and one or more discharge tubes extending from the interior of the condensation device to the outside of the device such that the cooling medium, preferably air, can be discharged from the condensation device. In this way the cool cooling medium can be introduced into the condensation device and the heated up cooling medium can be removed from the condensation device. However, many other configurations or cooling methods are likewise conceivable. For example, the heat exchanger could be provided by means of a Peltier element.

In order to enlarge the condensation surface on which the vaporized starting material is condensed it is conceivable to provide the condensation device with an outer wall that is corrugated.

Furthermore, the condensation device is preferably configured such, that a temperature gradient is established at the condensation device. The device may further comprise at least one temperature sensing element, preferably a thermocouple, which is in thermal contact with the condensation device, preferably integrated into the condensation device, and which is configured to measure the condensation device temperature. The condensation device temperature preferably follows a temperature gradient, wherein an upper region of the condensation device has a higher temperature than a lower region of the condensation device. That is, whereas the lower region of the condensation device is preferably slightly above the melting point of the target material and/or the liquidus temperature of the target material, the upper region of the condensation device preferably essentially corresponds to a chamber temperature. For instance, in the above example a length of the one or more supply tubes could be longer than a length of the one or more discharge tubes with respect to a vertical direction or vice versa. Additionally or alternatively, a wall thickness of the condensation device in an upper region of the condensation device could be thinner than a wall thickness of the condensation device in a lower region of the condensation device. The chamber, in particular the trough, is preferably heated to a chamber temperature being above the melting points of the starting material.

The device preferably further comprises at least one cover element, wherein the cover element is at least partially arranged above the collecting vessel with respect to a vertical direction and is configured to guide vaporized starting material that has condensed at an upper wall of the chamber back into the trough. The cover element prevents distillate that could have condensed on an inner wall of the chamber and which is potentially contaminated by dissolved particles from the inner wall of the chamber from flowing into the collecting vessel.

The cover element can extend from a main body of the condensation device laterally outwards. Alternatively, the cover element could extend from the upper wall of the chamber at least partially into the chamber. In the former and/or the latter case it is further conceivable that the cover element is arranged at an angle with respect to a vertical direction, wherein the angle is about 90° or less. Preferably the angle is between about 30 degrees to 90°, particularly preferably the angle is between about 45° to 90°. An angle of inclination being less than 90° means, that the cover element is inclined downwards in the direction of a lower region of the chamber.

The cover element can extend with respect to a horizontal direction to an extent such, that the cover element is at least partially located above the collecting vessel and/or the trough with respect to a vertical direction running perpendicularly to the horizontal direction.

As just mentioned, the cover element serves the purpose of providing a protection against a contamination of the target material contained in the collecting vessel. In this regard a temperature gradient having a temperature being slightly above the melting point of the target material and/or the liquidus temperature of the target material in the lower region of the condensation device and a temperature being in the range of the temperature present in the trough is preferred as this prevents or at least significantly reduces a condensation in regions other than the condensation surfaces of the condensation device. However, the cover element can also assist in the transfer of the condensed target material into the collecting vessel. It is therefore preferred if the cover element is arranged at an angle with respect to the vertical direction, wherein said angle of inclination is preferably large enough such that a flow-off and a subsequent drop-off of the distillate into the collecting vessel is ensured in a reliable manner. An angle of inclination being too small would lead to a partial uncontrolled dropping of the distillate into the trough, which would require another distillation at the cost of efficiency.

The device can further comprise a second heating element, wherein said second heating element is arranged in an upper region of the chamber and is configured to heat the upper region of the chamber and/or an upper region of the condensation device.

By heating the upper region of the chamber and/or of the condensation device a cooling of the lower region of the condensation device can be achieved, while at the same time the upper region of the chamber or of the condensation device can be held at a temperature being in the region of a temperature of the vaporized starting material. Such a selective heating of the upper regions could be an advantage if a cover element is present. Namely, and as already mentioned, the cover element serves the purpose of guiding contaminated condensed starting material back into the trough. It is desired that the cover element has a temperature that is essentially equal or higher than the temperature of the vaporized starting material so as to prevent a condensation of the vaporized starting material on the cover element.

The largest amount of energy is required at locations where the starting material has to evaporate. It is therefore preferred if the device further comprises a third heating element, wherein said third heating element is arranged below the trough with respect to a vertical direction and is configured to heat the trough additionally. This third heating element can be seen as a passive heating element which assists in the vaporization of the starting material being received in the trough and therefore accelerates the distillation. At the same time a temperature difference between the evaporating starting material and the condensate being collected in the trough can be kept constant. At high evaporation rates the temperature of the melted starting material drops quickly and is limited by the irradiation and convection of the first heating element. In fact, the evaporation speed drops exponentially with the temperature of the melt (Hertz-Knudsen equation). Nevertheless, the main heating is preferably achieved with the first heating element, which first heating element can correspond to a furnace that preferably entirely surrounds the chamber. With said additional condensing device in the upper region of the chamber it is possible to reach very high distillation rates that might require the said third heating element to keep the melt temperature inside the trough at the optimal level.

At least part of an outer wall of the condensation device and/or of an inner wall of the chamber and/or an inner wall of the collecting vessel can be coated with a coating, and wherein the coating is essentially inert, preferably essentially chemically and/or physically inert, to the starting material and/or to the condensate.

Such a coating brings the advantage that a contamination of the starting material and/or of the target material by dissolved particles from the inner wall of the chamber, from the outer wall of the condensation device, i.e. the condensation surfaces, and from the inner wall of the collecting vessel can be prevented. Hence, like the cover element mentioned above, the coating can serve the purpose of providing a protection against a contamination of the target material contained in the collecting vessel. Consequently, it is for example conceivable to coat the inner wall of the chamber and to dispense with the cover element.

Various coatings are conceivable. For example, a coating could comprise at least one of nitrides, carbides, oxides, pure metals, and alloys. Preferred nitrides are nitrides having a change in the Gibbs energy being associated with their nitration reaction that is more negative than a change in the Gibbs energy being associated with a nitration reaction of the components constituting the starting material. Conceivable nitrides are, for example, boron nitride (BN), tantalum nitride (TaN), aluminium nitride (AIN), cerium nitride (CeN), titanium nitride (TiN), and zirconium nitride (ZrN). Conceivable metals are, for example, chromium, tungsten, molybdenum, tantalum, titanium, zirconium, and rhenium.

A cross-section of the condensation device can be larger than or essentially equal to or smaller than a cross-section of the collecting vessel.

The device can further comprise a funnel element which is arranged above an inlet opening of the collecting vessel, wherein the funnel element is configured to guide the condensate into the inlet opening of the collecting vessel. A funnel element is particularly advantageous if a cross-section of the condensation device is larger than a cross-section of the collecting vessel in order to guide condensate that is falling from the condensation device into the collecting vessel. Additionally or alternatively the device can further comprise at least one sealing element which is arranged around an upper region of the collecting vessel, wherein the sealing element is configured to provide a sealing between the upper region of the collecting vessel and the chamber. The sealing element serves the purpose of sealing a gap that can be present between the collecting vessel and the chamber. It is preferred if a thermal expansion coefficient of the sealing element essentially equals a thermal expansion coefficient of the chamber.

The device can further comprise a fourth heating element, wherein said fourth heating element is arranged in a lower region of the chamber and in vicinity to an upper region of the collecting vessel, and wherein said fourth heating element is configured to heat the upper region of the collecting vessel to a vessel temperature being above a melting point of the starting material and to heat a lower region of the collecting vessel to a vessel temperature being slightly above a melting point of the target material and/or a liquidus temperature of the target material.

If the collecting vessel is configured to be dismantled from the device it is preferred that an upper part of the collecting vessel is sealed with a sealing element as mentioned above. However, despite of said sealing element a sealing gap usually persists. During the distillation process said sealing gap can be filled with condensate which eventually could solidify. At the end of a distillation process it is recommended to remove such material from the sealing gaps since it could otherwise clamp the collecting vessel. It is therefore preferred that a vessel temperature in the upper region of the collecting vessel is above a melting point of the starting material, whereas a vessel temperature in the lower region of the collecting vessel is slightly above a melting point of the target material and/or a liquidus temperature of the target material. That is, a certain temperature gradient established in the collecting vessel can be advantageous. A deep collecting vessel could address this problem. However, materials that constitute the collecting vessel are often rather expensive. Moreover, the collecting vessel can be damaged during its disassembly and the removal of the target material. To address this problem the collecting vessel preferably corresponds to a multi-piece element comprising at least a first collecting vessel element and a second collecting vessel element. The provision of a multi-part collecting vessel allows one to use different materials that are adapted for their use. Furthermore, between the individual collecting vessel elements an additional gap is established which further complicates a heat transfer and thus leads to a greater heat gradient.

Components of the device which get into contact with the contaminated primary melt can be made from stainless steel, for example. This, because a potential removal of iron or other undesired impurities from the stainless steel does not pose a problem because the distillation process, during which impurities are removed, has not taken place yet. However, increased requirements apply to those components of the device which come into contact with the distilled material. Said requirements are, inter alia, sufficient mechanical load-bearing capacity under the process temperatures, no chemical reaction with the distillation material, no removal of potentially undesirable substances, and no wetting of a surface if a solidification of the distillation melt is desired during the contact with such a surface (as this could lead to adhesion of the distilled material to the surface). Hence, the condensation device can be made of a material that differs from a material the collecting vessel is made from. Additionally or alternatively the chamber can be made of a material that differs from the material the collecting vessel is made from. Additionally or alternatively the chamber can be made of a material comprising at least one of heat-resistant steel, stainless steel, and chromium steel. Additionally or alternatively the condensation device can be made of a material comprising at least one of heat-resistant steel, stainless steel, chromium steel, graphite, boron nitride, one or more metals, and one or more oxides. Additionally or alternatively the collecting vessel can be made of a material comprising at least one of graphite, boron nitride, one or more metals, and one or more oxides. Conceivable metals are, for example, tungsten, molybdenum, tantalum, titanium, zirconium, and rhenium. The one or more oxides preferably correspond to oxides having a change in the Gibbs energy being associated with their oxidation reaction that is more negative than a change in the Gibbs energy being associated with an oxidation reaction of the components constituting the starting material. Conceivable oxides are, for example, Sc₂O3, Tm₂O₃, Y₂O₃, Lu₂O₃, Ho₂O₃, Dy₂O₃, Sc₂O₃, Gd₂O₃, Md₂O₃, Pr₂O₃, Sm₂O₃, Tb₂O₃, ThO₂.

In a further aspect a method of producing a target material, preferably one or more metals and/or one or more alloys, from starting material is provided, wherein the method comprises the steps of i) introducing the starting material in at least one trough being provided in a chamber, ii) heating the chamber with at least a first heating element such, that the starting material being received in the trough is vaporized, and iii) receiving a condensate that will constitute the target material in at least one collecting vessel. The method further comprises the step of iv) condensating the vaporized starting material with at least one condensation device, whereby the condensate is formed.

It should be noted that this ordering of the method steps does not have to correspond to a chronological order. Instead, it is preferred that the vaporized material is condensated with the condensation device (step iv)) before it is received in the collecting vessel (step iii)), for example.

Furthermore, it is noted that this method is preferably performed with a device according to the first aspect described above. Any explanations provided with regard to said device therefore likewise apply to the method of producing the target material by means of said device.

In a further aspect a method of producing a target material, preferably one or more metals and/or one or more alloys, from starting material is provided, wherein the method comprises the steps of i) evacuating a chamber with at least a first source of negative pressure that is in connection with the chamber or supplying an inert gas into the chamber via at least a first supply device that is in connection with the chamber, ii) introducing the starting material in at least one trough being provided in a chamber, iii) heating the chamber with at least a first heating element such that the starting material being received in the trough is vaporized, iv) receiving a condensate that will constitute the target material in at least one collection vessel, and optionally v) condensating the vaporized starting material with at least one condensation device, whereby the condensate is formed. The method further comprises the step of vi) introducing the starting material into the chamber via at least a first gate device being in connection with the chamber while the chamber preferably remains evacuated or under an inert gas atmosphere.

It should be noted that this ordering of the method steps does not have to correspond to a chronological order. Instead, it is preferred that at least a first introduction of the starting material into the chamber via the at least first gate device (step vi)) is performed before the condensate is received in the collection vessel (step iv)), for example. Moreover, the method steps can be carried out only one time. However, it is preferred that the method steps are carried out two or more times. In particular, the method is suitable for a continuous production of the target material.

Furthermore, it is noted that this method is preferably performed with a device according to the second aspect described above. Any explanations provided with regard to said device therefore likewise apply to the method of producing the target material by means of said device.

In both methods the condensation device is preferably cooled to a condensation device temperature that is slightly higher than a melting point of the target material and/or a liquidus temperature of the target material. The expression slightly higher is understood here as referring to a temperature by which the condensation device temperature is higher than the melting point of the target material and/or the liquidus temperature of the target material being in the range of about 1°C to 50 °C, more preferably being in the range of about 5°C to 30°C. Generally, it can be noted that the bigger a temperature difference between the trough and the condensation vessel is, the faster is the associated distillation rate.

In both methods, the condensate being received in the collection vessel can be removed from the collection vessel while the chamber remains heated and vacuum or inert gas atmosphere is maintained. In this regard reference is made to the above explanations regarding the various configurations of the device such as the presence of one or more second gate devices and possibly also a retrieval chamber which allow a continuous removal of the collected condensate from the collecting vessel. However, it is of course likewise conceivable to produce the target material by means of a continuous casting or a casting based on casting drums.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a sectional view through a device comprising a condensation element and a coating;
- Fig. 2: shows a sectional view through a device comprising a condensation element, a coating and a cover element according to another embodiment;
- Fig. 3: shows a sectional view through a device comprising a condensation element and a cover element according to another embodiment;
- Fig. 4: shows a sectional view through a device comprising a condensation element and a funnel element according to another embodiment;
- Fig. 5: shows a sectional view through a device comprising a condensation element, a coating, a funnel element, and a collecting vessel according to another embodiment;
- Fig. 6: shows a sectional view through a device comprising a condensation element, a coating, a collecting vessel, and a first source of negative pressure or supply device and a second source of negative pressure or supply device according to another embodiment;
- Fig. 7: shows a sectional view through a device comprising a condensation element, a coating, a collecting vessel, and a first source of negative pressure or supply device and a second source of negative pressure or supply device according to another embodiment.

### DESCRIPTION OF PREFERRED EMBODIMENTS

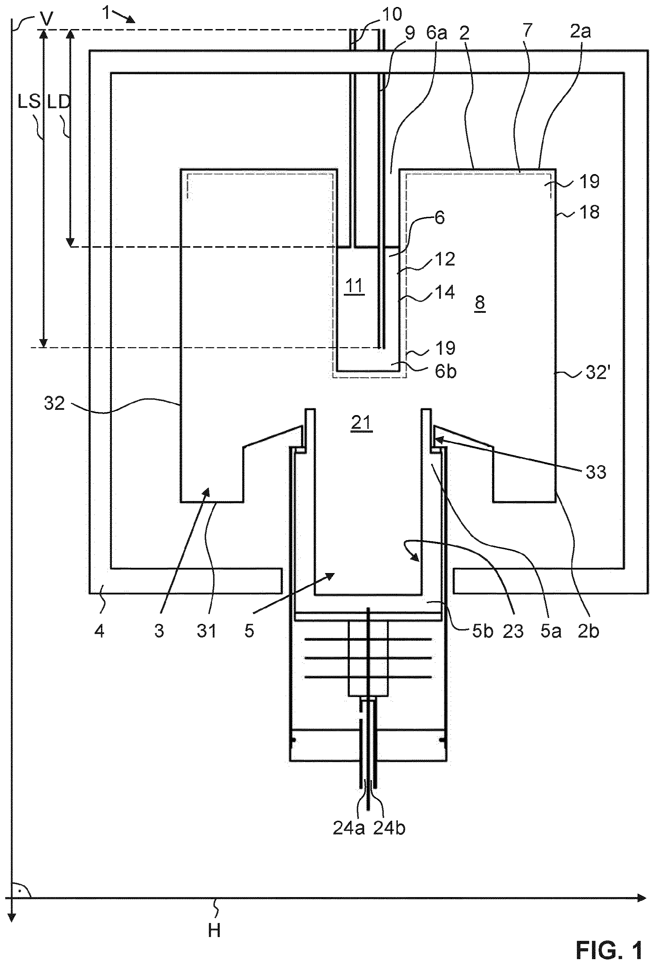

Figures 1 to 7 depict several embodiments of a device 1 for producing a target material, preferably one or more metals and/or one or more alloys, from starting material. Although not always depicted the devices 1 according to all embodiments in each case comprise a chamber 2, within which a trough 3 is provided. In these examples the chamber 2 corresponds to a chamber 2 which is constituted by four chamber walls and whose cross-section is essentially squared. Namely an upper wall 7, a lower wall 31, and two side walls 32, 32'. The trough 3 corresponds to a recess being provided in the lower wall 31 of the chamber 2, which recess 3 extends entirely around a circumference of the chamber 2. The trough 3 is configured to receive the starting material. The device 1 further comprises a first heating element 4, which essentially entirely surrounds the chamber 2 and which is configured to heat the chamber 2 such that starting material being received in the trough 3 is vaporized. The lower wall 31 of the chamber 2 comprises a chamber opening 33 that is passed through a collecting vessel 5. The collecting vessel 5 is configured to receive a condensate that will constitute the target material. In the following, these and further features of the devices 1 according to the invention shall be explained in greater detail. It is important to note that features that are depicted here only in some figures can likewise be present in the devices depicted in the other figures. The same applies to features that are absent in certain figures. Such features could likewise be absent in the devices of the other figures. That is to say, the depicted embodiments shall be seen as explanatory examples of the individual features.

In the devices 1 depicted in figures 1 to 7 a condensation device 6 is present in an upper region 2a of the chamber 2. The condensation device 6 extends from an outside of the device 1 through the heating element 4 as well as through the upper wall 7 of the chamber 2 at least partially into the interior 8 of the chamber 2. The condensation device 6 is configured to condensate the vaporized starting material, whereby the condensate is formed. Moreover, in the present examples the condensation device 6 is an integral part of the chamber 2. The collecting vessel 5 is arranged in a lower region 2b of the chamber 2 and located below the condensation device 6 with respect to a vertical direction V. In this case, condensate that drops or flows from the condensation device 6 vertically downward falls through an inlet opening 21 of the collecting vessel 5 and into the collecting vessel 5.

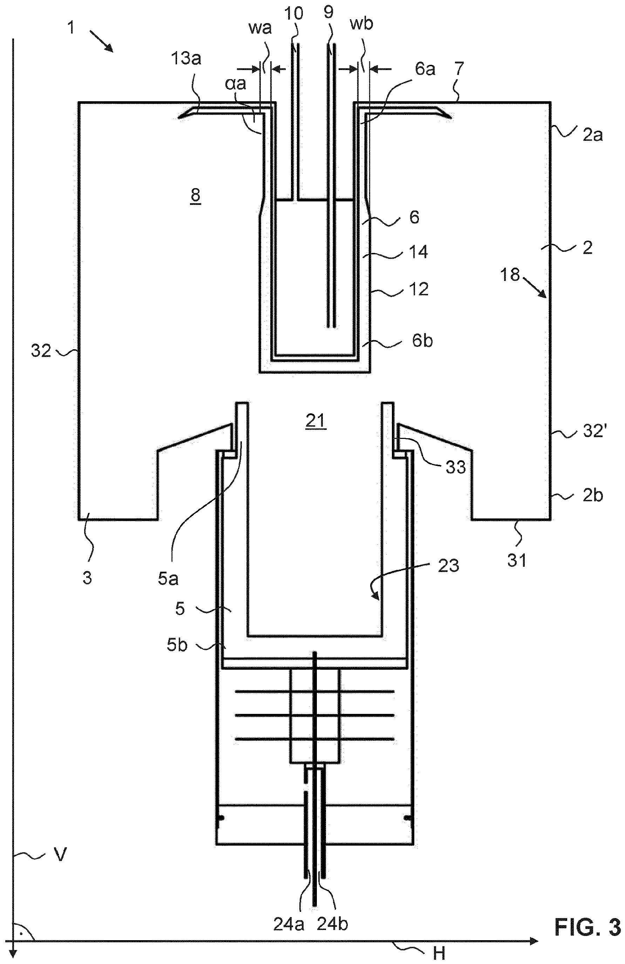

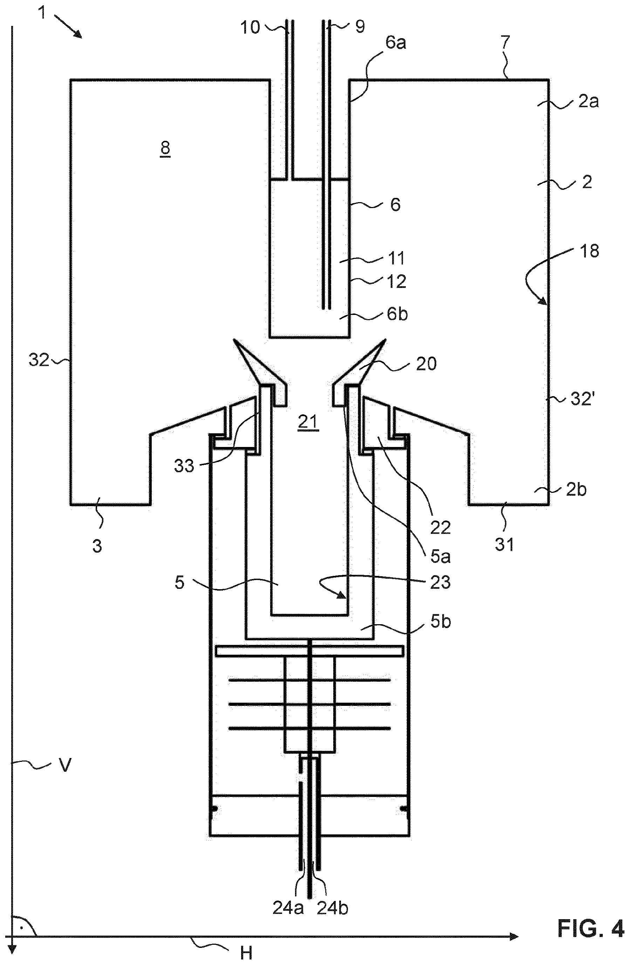

As follows from figures 1, 2 and 6, a cross-section DC of the condensation device 6 can be smaller than a cross-section DV of the collecting vessel 5. However, it is likewise conceivable that a cross-section DC of the condensation device 6 is essentially equal to a cross-section DV of the collecting vessel 5 or larger than a cross-section DV of the collecting vessel 5, see figure 3 and figures 5 and 7, respectively. In the latter case a funnel element 20 is arranged above the inlet opening 21 of the collecting vessel 5 so as to guide the condensate into the inlet opening 21 of the collecting vessel 5. The device 1 depicted in figure 4 furthermore comprises a sealing element 22 which is arranged around an upper region 5a of the collecting vessel 5. The sealing element 22 is configured to seal the upper region 5a of the collecting vessel 5 against the chamber 2, in particular against the chamber opening 33.

The condensation device 6 corresponds to a heat exchanger and is preferably configured such, that a temperature gradient is established at the condensation device 6, see also explanations provided further below. The devices 1 according to figures 1 to 5 in each case comprise a condensation device 6 in the form of a heat exchanger with comprises one or more supply tubes 9 extending from an outside of the device 1 into an interior 11 of the condensation device 6 and one ore more discharge tubes 10 extending from the interior 11 of the condensation device 6 to the outside of the device 1. A cooling medium, preferably air at room temperature, is supplied from the outside into the interior 11 of the condensation device 6 via the supply tube 9. Because the temperature within the chamber 2 is high during the distillation process, said cooling medium is heated up in the lower region 6b of the condensation device 6, wherein the heated cooling medium will afterwards be discharged from the condensation device 6 towards the outside via the discharge tube 10. As already mentioned it is preferred that a temperature gradient is established at the condensation device 6. Although not depicted in the figures it is preferred that the device 1 further comprise at least one temperature sensing element, preferably a thermocouple, which is in thermal contact with the condensation device 6 so as to measure the condensation device temperature. For instance, the temperature sensing element can be integrated into the condensation device 6. The condensation device temperature preferably follows a temperature gradient, wherein an upper region 6a of the condensation device 6 has a higher temperature than a lower region 6b of the condensation device 6. That is, whereas the lower region 6b of the condensation device 6 is preferably slightly above the melting point of the target material and/or the liquidus temperature of the target material, the upper region 6a of the condensation device 6 preferably essentially corresponds to a chamber temperature. To this end the condensation device 6 in the said figures 1 to 5 comprises a supply tube 9 and a discharge tube 10 of different length. Here, a length LS of the supply tube 9 is longer than a length LD of the discharge tube 10 with respect to a vertical direction V. Other configurations are of course likewise possible. For example, and as can be seen in figure 3, a wall thickness wa of the condensation device 6 in an upper region 6a of the condensation device 6 can be made thinner than a wall thickness wb of the condensation device 6 in a lower region 6b of the condensation device 6. In this case, a temperature gradient is established by the difference in wall thicknesses. The chamber 2, in particular the trough 3, however is preferably heated to a chamber temperature being above the melting points of the starting material. In this way it is possible to evaporate the starting materials being received in the trough 3 of the chamber 2.

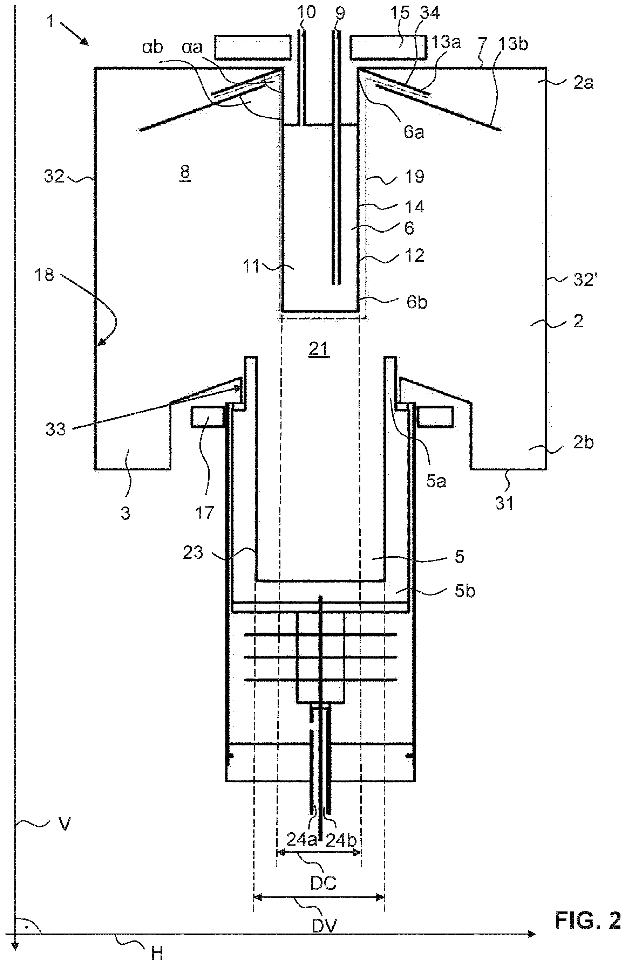

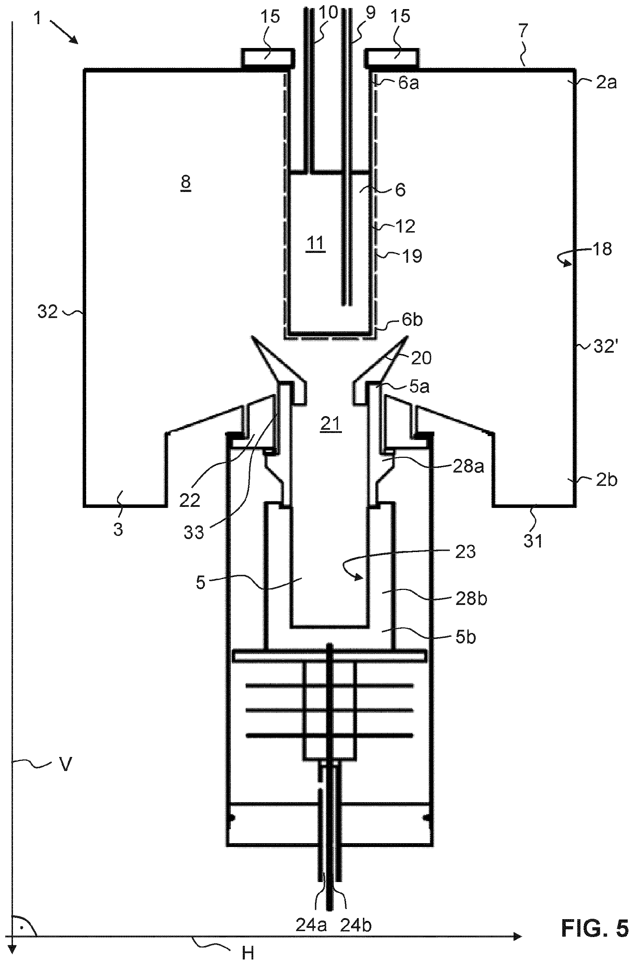

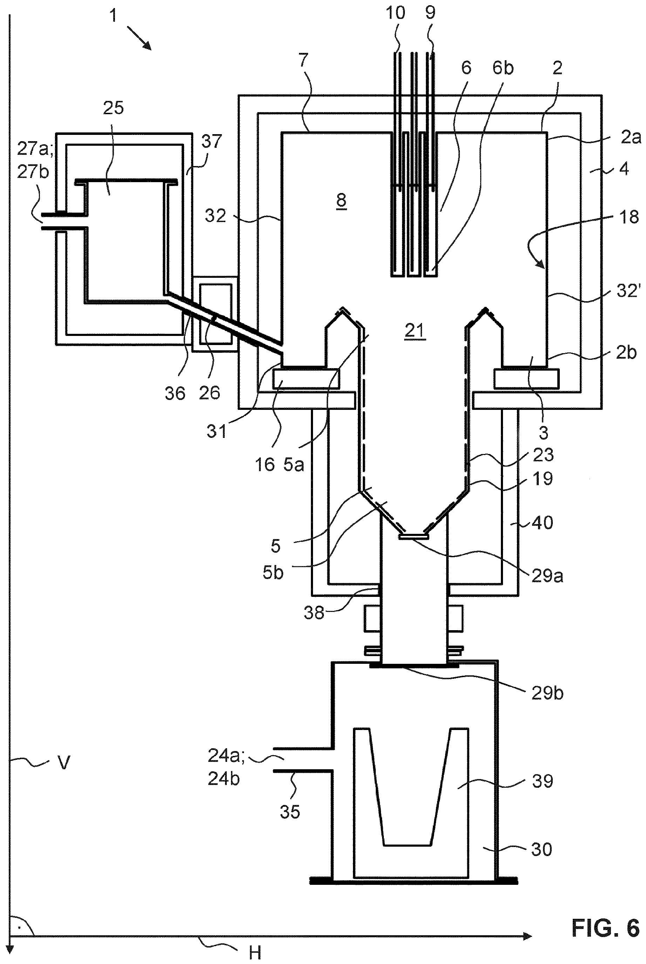

A contamination of the starting material and/or of the target material by dissolved particles generated by unwanted condensed drops at the inner wall 18 of the chamber 2, from the outer wall 12 of the condensation device 6, i.e. the condensation surfaces, and from the inner wall 23 of the collecting vessel 5 can be prevented by means of an appropriate coating 19. The coating 19 is essentially chemically and/or physically inert to the starting material and/or to the condensate and is depicted in figures 1, 2, 5 and 6. In fact, the coating 19 depicted in figure 1 corresponds to a coating 19 that is applied to the inner wall 18 of the chamber 2 in the upper region 2a of the chamber 2 as well as on the entire outer wall or surface 12 of the condensation device 6. This is in contrast to the device 1 depicted in figure 5, wherein a coating 19 is only applied on the entire outer wall or surface 12 of the condensation device 6. In addition to such a coating or instead of such a coating the device 1 can comprise a cover element 13a, 13b which likewise serves the purpose of providing a protection against a contamination of the target material contained in the collecting vessel 5. The devices 1 depicted in figures 2 and 3 comprise such a cover element 13a, 13b. The cover elements 13a, 13b depicted in figures 2 and 3 are in each case arranged in an upper region 2a of the chamber 2 as well as at least partially above the collecting vessel 5 with respect to the vertical direction V. Particularly, the device 1 according to figure 2 comprises a first cover element 13a extending from a main body 14 of the condensation device 6 laterally outwards and a second cover element 13b extending from the upper wall 7 of the chamber 2 at least partially into the chamber 2. Both cover elements 13a, 13b are arranged at an angle aa, ab with respect to the vertical direction V, wherein the angle aa associated with the first cover element 13a is inclined downwardly by about 45° with respect to the vertical direction V. Likewise, the angle ab associated with the second cover element 13b is inclined downwardly by about 45° with respect to the vertical direction V. Furthermore, a surface 34 of the first cover element 13a is coated with a coating 19. This is in contrast to the cover element 13a depicted in figure 3, which cover element 13a is free from any coating and is arranged at an angle aa of about 90° with respect to the vertical direction V. The cover elements 13a, 13b depicted in figure 2 extend with respect to a horizontal direction H running perpendicularly to the vertical direction V to an extent such, that the cover element 13a is at least partially located above the collecting vessel 5 and the cover element 13b is at least partially located above the trough 3 with respect to the vertical direction V. The cover element 13a of figure 3, however, is arranged partly above the collecting vessel 5, but does not extend until the trough 3. The device 1 depicted in figure 6 comprises a collecting vessel 5 whose inner wall 23 is coated with the coating 19.

The devices 1 depicted in figures 2 and 5 further comprise a second heating element 15, which is arranged in an upper region 2a of the chamber 2, here on top of the upper wall 7 of the chamber 2, and which is configured to heat the upper region 2a of the chamber 2 and the upper region 6a of the condensation device 6. The second heating element 15 allows to heat the upper region 2a of the chamber 2 and the upper region 6a of the condensation device 6, such that a lower region 6b of the condensation device 6 has a lower temperature than the upper region 6a of the condensation device 6. In this case a temperature gradient is established between the lower region 6b of the condensation device 6 and the upper region 6a of the condensation device 6. Such a second heating element 15 is also beneficial if a cover element 13a, 13b is present as it is shown in figure 2, where the second heating element 15 allows a heating of the cover element 13a, 13b to a temperature that essentially corresponds to the temperature of the vaporized starting material.

Further heating elements can be present. For example, and as is depicted in figure 6, a third heating element 16 can be arranged below the trough 3 with respect to the vertical direction V in order to additionally heat the trough 3. Moreover, and as follows from figure 2, a fourth heating element 17 being arranged in a lower region 2b of the chamber 2 and in vicinity to an upper region 5a of the collecting vessel 5 is conceivable, wherein said fourth heating element 17 is configured to heat the upper region 5a of the collecting vessel 5 to a vessel temperature being above a melting point of the starting material and to heat a lower region 5b of the collecting vessel 5 to a vessel temperature being slightly above a melting point of the target material and/or a liquidus temperature of the target material. This fourth heating element 17 allows an evaporation of any material that has solidified in gaps that exist between removable parts, such as a gap between the collecting vessel 5 and the chamber opening 33 for example. Any clamping caused by the solidified material can thereby be eliminated and a removal of the collecting vessel 5 from the chamber 2 is facilitated. Several configurations of the collecting vessel 5 are conceivable. Namely, and as already mentioned, a size such as the cross-section DV of the collecting vessel 5 is variable and can be chosen adapted to the use. Likewise, different lengths of the collecting vessel 5 are conceivable. Furthermore, and as depicted in figure 5, a collecting vessel 5 being composed of several parts is possible. For example, the collecting vessel 5 can comprise a first collecting vessel element 28a that is removable connectable to a second collecting vessel element 28b. The collecting vessel elements 28a, 28b depicted in figure 5 comprise different wall thicknesses, wherein a wall thickness of the second collecting vessel element 28b is greater than a wall thickness of the first collecting vessel element 28a. These different thicknesses result in an optimized temperature gradient along the collecting vessel 5.

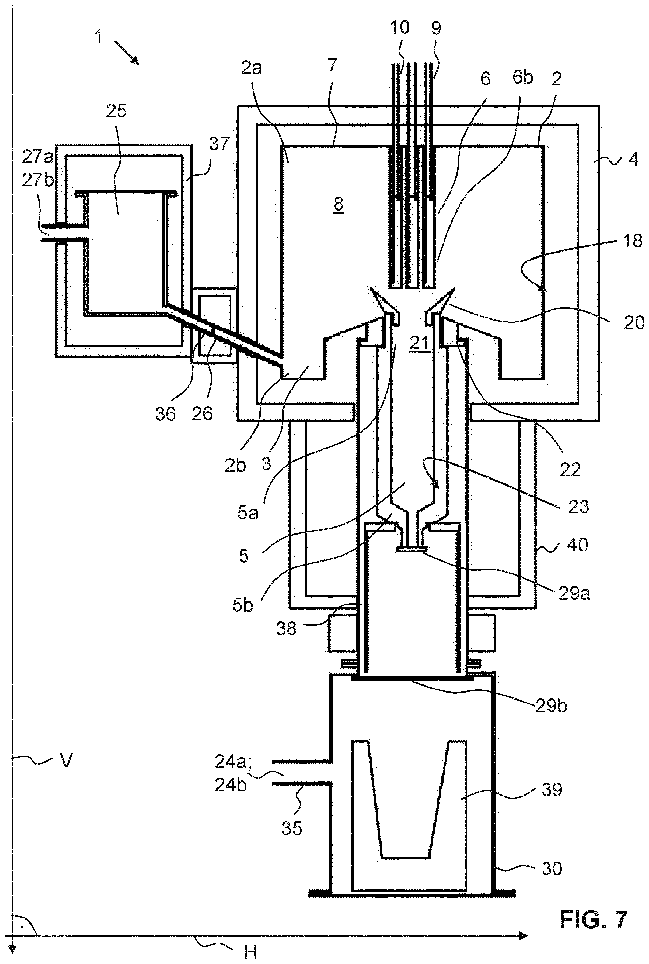

The devices 1 depicted in figures 1 to 7 are configured to be operated under vacuum or in the presence of an inert gas atmosphere, respectively. To this end either a first source of negative pressure 24a is provided that is in connection with the chamber 2 and which is configured to evacuate the chamber 2 or a first supply device 24b is provided that is likewise in connection with the chamber 2 and that is configured to supply an inert gas to the chamber 2. In the former case, the distillation being carried out by the device 1 is referred to as a vacuum distillation. As can be readily seen in the figures, the source of negative pressure 24a and the supply device 24b are in connection with the device 1 via appropriate connections 35, for example tubes or pipes. These and other elements associated with the application of a vacuum or an inert gas atmosphere will now be explained in greater detail with reference to figures 6 and 7. It is once more noted that these features can likewise be present in the devices 1 depicted in figures 1 to 5.

Hence, the devices 1 according to figures 6 and 7 in each case comprise a first source of negative pressure 24a or a first supply device 24b that is in connection with the chamber 2 as just mentioned. Moreover, these devices 1 comprise a first gate device 26 being in connection with the chamber 2 such, that the starting material is introducible into the chamber 2 via said first gate device 26. In the present examples, the device 1 is configured such, that the starting material is introducible into the chamber 2 via said first gate device 26 while the chamber 2 remains evacuated or under an inert gas atmosphere. This is enabled by the presence of an antechamber 25 that is in connection with the chamber 2 via the first gate device 26. In particular, the first gate device 26 is arranged within a pipe or tube 36 that connects the antechamber 25 with the interior of the chamber 2. Here, the antechamber 25 is surrounded by a sixth heating element 37 which is configured to heat the antechamber 25. Hence, by introducing starting material into the antechamber 25 it is possible to pre-heat said starting material within the antechamber 25 and to then transfer said pre-heated starting material into the trough 3 via the pipe or tube 36 if the first gate device 26 is in an opened position. As the chamber 2 is preferably evacuated or under an inert gas atmosphere it is preferred to maintain said state within the chamber 2. The device 1 therefore further comprises a second source of negative pressure 27a or a second supply device 27b that is in connection with the antechamber 25 in order to evacuate the antechamber 25 or to supply inert gas to the antechamber 25. If the first gate device 26 is in its closed position the chamber 2 is closed towards an outside. Here, it is closed towards the antechamber 25. The antechamber 25 together with the first gate device 26 can thus be seen as a sluice device that allows a continuous introduction of the starting material into the chamber 2 while the chamber 2 remains evacuated or under an inert gas atmosphere and with or without cooling of the chamber 2.

The device 1 further comprises two second gate devices 29a, 29b that are in connection with the collecting vessel 5, and wherein the condensate is removable from the collecting vessel 5 via said second gate devices 29a, 29b. Here, one second gate device 29a is configured as a lid that is arranged in a bottom region of the collecting vessel 5. Said second gate device 29a is in connection with a second gate device 29b being arranged vertically below via a tube or pipe 38. Said lower second gate device 29b in turn is in connection with a retrieval chamber 30. By opening the second gate devices 29a, 29b the condensate received within the collecting vessel 5 can be transferred, either in its liquid state or in a solidified form, from the collecting vessel 5 into the retrieval chamber 30. If the condensate is to be removed in its liquid state it is preferred to provide a casting mould 39 within the retrieval chamber 30 that collects the liquid condensate. Furthermore, if the condensate shall be removed in the liquid state a seventh heating element 40 can be arranged around the collecting vessel 5 so as to ensure that the condensate remains in its liquid state. The casting mould 39 and the retrieval chamber 30, however, are preferably kept at room temperature. The retrieval chamber 30 can be in connection with the first source of negative pressure 24a or with the first supply device 24b, respectively. In doing so a second sluice device being constituted by the tube or pipe 38 that connects the second gate devices 29a, 29b and the retrieval chamber 30 is provided. This arrangement allows a removal of the condensate from the collecting vessel 5 while the chamber 2 remains evacuated or under an inert gas atmosphere.

Hence, the devices 1 according to the invention enable an introduction of starting material into the chamber 2 and a removal of the target material from the collecting vessel 5 while the chamber remains evacuated or under an inert gas atmosphere. In other words, the devices 1 enable a continuous distillation that is associated with high conversions and very attractive from an economical point of view.

**LIST OF REFERENCE SIGNS**

| | | | |
|---|---|---|---|
| 1 | device | 24a | source of negative pressure |
| 2 | chamber | 24b | supply device |
| 2a | upper region of chamber | 25 | antechamber |
| 2b | lower region of chamber | 26 | gate device |
| 3 | trough | 27a | source of negative pressure |
| 4 | heating element | 27b | supply device |
| 5 | collecting vessel | 28a | first collecting vessel element |
| 5a | upper region of collecting vessel | 28b | second collecting vessel element |
| 5b | lower region of collecting | 29a | gate device |
| | vessel | 29b | gate device |
| 6 | condensation device | 30 | retrieval chamber |
| 6a | upper region of condensation device | 31 | lower wall of chamber |
| | | 32, 32' | side wall of chamber |
| 6b | lower region of condensation | 33 | chamber opening |
| | device | 34 | surface |
| 7 | upper wall of chamber | 35 | connection |
| 8 | interior | 36 | tube |
| 9 | supply tube | 37 | heating element |
| 10 | discharge tube | 38 | tube |
| 11 | interior | 39 | mould |
| 12 | outer wall of condensation device | 40 | heating element |
| 13a, 13b | cover element | H | horizontal direction |
| 14 | main body | V | vertical direction |
| 15 | heating element | LS | length of supply tube |
| 16 | heating element | LD | length of discharge tube |
| 17 | heating element | Wa | wall thickness in upper region |
| 18 | inner wall of chamber | Wb | wall thickness in lower region |
| 19 | coating | αa | angle |
| 20 | funnel element | αb | angle |
| 21 | inlet opening | DC | cross-section |
| 22 | sealing element | DV | cross-section |
| 23 | inner wall of collecting vessel | | |

## Claims

1. A device (1) for producing a target material, preferably one or more metals and/or one or more alloys, from starting material comprising:
- a chamber (2);
- at least one trough (3) being provided in the chamber (2), wherein the trough (3) is configured to receive the starting material;
- at least a first heating element (4), wherein the first heating element (4) is configured to heat the chamber (2) such that a starting material being received in the trough (3) is vaporized; and
- at least one collecting vessel (5), wherein the collecting vessel (5) is configured to receive a condensate that will constitute the target material,
**characterized in that** the device (1) further comprises at least one condensation device (6), wherein said condensation device (6) is configured to condensate the vaporized starting material, whereby the condensate is formed.

2. A device (1) for producing a target material, preferably one or more metals and/or one or more alloys, from starting material comprising:
- a chamber (2);
- at least one trough (3) being provided in the chamber (2), wherein the trough (3) is configured to receive the starting material;
- at least a first heating element (4), wherein the first heating element (4) is configured to heat the chamber (2) such that starting material being received in the trough (3) is vaporized;
- at least one collecting vessel (5), wherein the collecting vessel (5) is configured to receive a condensate that is formed upon a condensation of the starting material and which condensate will constitute the target material;
- at least a first source of negative pressure (24a) that is in connection with the chamber (2) and that is configured to evacuate the chamber (2) or at least a first supply device (24b) that is in connection with the chamber (2) and that is configured to supply an inert gas to the chamber (2), and
- optionally at least one condensation device (6), wherein said condensation device (6) is configured to condensate the vaporized starting material, whereby the condensate is formed;
**characterized in that** the device (1) further comprises at least a first gate device (26) being in connection with the chamber (2) such, that the starting material is introducible into the chamber (2) via said first gate device (26).

3. The device (1) according to claim 2, wherein the device (1) is configured such, that the starting material is introducible into the chamber (2) via said first gate device (26) while the chamber (2) remains evacuated or under an inert gas atmosphere.

4. The device (1) according to claim 2 or 3, further comprising a preferably heated antechamber (25) that is in connection with the chamber (2) via the first gate device (26), wherein the antechamber (25) is configured to receive and preferably pre-melt the starting material and to transfer the preferably pre-melted starting material into the trough (3) via the first gate device (26), and
wherein the device (1) preferably further comprises at least a second source of negative pressure (27a) that is in connection with the antechamber (25) in order to evacuate the antechamber (25) or at least a second supply device (27b) that is in connection with the antechamber (25) in order to supply inert gas to the antechamber (25).

5. The device according to any one of claims 2 to 4, further comprising at least a second gate device (29a, 29b) being in connection with the at least one collecting vessel (5), and wherein the condensate is removable from the at least one collecting vessel (5) via said second gate device (29a, 29b).

6. The device (1) according to claim 5, further comprising a retrieval chamber (30) that is in connection with the collecting vessel (5) via the second gate device (29a, 29b) and with the first source of negative pressure (24a) or with the first supply device (24b), and
wherein the retrieval chamber (30) is configured to extract the condensate from the collecting vessel (5).

7. The device (1) according to any one of the preceding claims, wherein the collecting vessel (5) and the condensation device (6) are formed separately from one another.

8. The device (1) according to any one of the preceding claims, wherein the condensation device (6) projects from an upper wall (7) of the chamber (2) at least partially into an interior (8) of the chamber (2), and/or
wherein the condensation device (6) is an integral or a separable part of the chamber (2).

9. The device (1) according to any one of the preceding claims, wherein the condensation device (6) corresponds to a heat exchanger and is preferably configured such, that a temperature gradient is established at the condensation device (6).

10. The device (1) according to any one of the preceding claims, further comprising at least one cover element (13a, 13b), wherein the cover element (13a, 13b) is at least partially arranged above the collecting vessel (5) with respect to a vertical direction (V) and is configured to guide vaporized starting material that has condensed at an upper wall (7) of the chamber (2) back into the trough (3).

11. The device (1) according to claim 10, wherein the cover element (13a) extends from a main body (14) of the condensation device (6) laterally outwards, or
wherein the cover element (13b) extends from the upper wall (7) of the chamber (2) at least partially into the chamber (2); and/or
wherein the cover element (13a, 13b) is arranged at an angle (aa, ab) with respect to a vertical direction (V), and
wherein the angle (aa, ab) is about 90° or less, preferably the angle (aa, ab) is between about 30 degrees to 90°, particularly preferably the angle (aa, ab) is between about 45° to 90°.

12. The device (1) according to any one of the preceding claims, wherein at least part of an outer wall (12) of the condensation device (6) and/or of an inner wall (18) of the chamber (2) and/or an inner wall (23) of the collecting vessel (5) is coated with a coating (19), and wherein the coating (19) is essentially inert, preferably essentially chemically and/or physically inert, to the starting material and/or to the condensate.

13. The device (1) according to any one of the preceding claims, further comprising a funnel element (20) which is arranged above an inlet opening (21) of the collecting vessel (5), wherein the funnel element (20) is configured to guide the condensate into the inlet opening (21) of the collecting vessel (5), and/or
further comprising at least one sealing element (22) which is arranged around an upper region (5a) of the collecting vessel (5), wherein the sealing element (22) is configured to provide a sealing between the upper region (5a) of the collecting vessel (5) and the chamber (2).

14. The device (1) according to any one of the preceding claims, further comprising a fourth heating element (17), wherein said fourth heating element (17) is arranged in a lower region (2b) of the chamber (2) and in vicinity to an upper region (5a) of the collecting vessel (5), and wherein said fourth heating element (17) is configured to heat the upper region (5a) of the collecting vessel (5) to a vessel temperature being above a melting point of the starting material and to heat a lower region (5b) of the collecting vessel (5) to a vessel temperature being slightly above a melting point of the target material and/or a liquidus temperature of the target material.

15. The device (1) according to any one of the preceding claims, wherein the condensation device (6) is made of a material that differs from a material the collecting vessel (5) is made from, and/or
wherein the chamber (2) is made of a material that differs from the material the collecting vessel (5) is made from, and/or
wherein the chamber (2) is made of a material comprising at least one of heat-resistant steel, stainless steel, and chromium steel, and/or
wherein the condensation device (6) is made of a material comprising at least one of heat-resistant steel, stainless steel, chromium steel, graphite, boron nitride, one or more metals, and one or more oxides, and/or
wherein the collecting vessel (5) is made of a material comprising at least one of graphite, boron nitride, one or more metals, and one or more oxides.

16. A method of producing a target material, preferably one or more metals and/or one or more alloys, from starting material comprising the steps of:
- Introducing the starting material in at least one trough (3) being provided in a chamber (2);
- Heating the chamber (2) with at least a first heating element (4) such, that the starting material being received in the trough (3) is vaporized;
- Receiving a condensate that will constitute the target material in at least one collecting vessel (5);
**characterized in that** the method further comprises the step of condensating the vaporized starting material with at least one condensation device (6), whereby the condensate is formed.

17. A method of producing a target material, preferably one or more metals and/or one or more alloys, from starting material comprising the steps of:
- Evacuating a chamber (2) with at least a first source of negative pressure (24a) that is in connection with the chamber (2) or supplying an inert gas into the chamber (2) via at least a first supply device (24b) that is in connection with the chamber (2);
- Introducing the starting material in at least one trough (3) being provided in a chamber (2);
- Heating the chamber (2) with at least a first heating element (4) such that the starting material being received in the trough (3) is vaporized;
- Receiving a condensate that will constitute the target material in at least one collection vessel (5); and
- Optionally condensating the vaporized starting material with at least one condensation device (6), whereby the condensate is formed,
**characterized in that** the method further comprises the step of introducing the starting material into the chamber (2) via at least a first gate device (26) being in connection with the chamber (2) while the chamber (2) preferably remains evacuated or under an inert gas atmosphere.

18. The method according to claim 16 or 17, wherein the condensation device (6) is cooled to a condensation device temperature that is slightly higher than a melting point of the target material and/or a liquidus temperature of the target material.

19. The method according to any one of claims 16 to 18, wherein the condensate being received in the collection vessel (5) is removed from the collection vessel (5) while the chamber (2) remains heated.
